Europäisches Patentamt

European Patent Office

Office européen des brevets

(19)

(11) **EP 1 020 831 A1**

(12) **EUROPEAN PATENT APPLICATION**

(43) Date of publication:
**19.07.2000 Bulletin 2000/29**

(51) Int Cl.7: **G08G 1/02**, G01D 18/00

(21) Application number: **99830008.1**

(22) Date of filing: **15.01.1999**

| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Tecnotel S.r.l.**<br>**40069 Zola Predosa (Bologna) (IT)** | (72) Inventor: **Piazzi, Bruno**<br>**I-40069 Zola Predosa- Bologna (IT)**<br><br>(74) Representative: **Pezzoli, Ennio et al**<br>**Jacobacci & Perani S.p.A.**<br>**Via Senato, 8**<br>**20121 Milano (IT)** |

(54) **Driving device for a contact transit sensor**

(57)    Driving device (165a) for a contact transit sensor (105a) comprising logical means (220) for generating a status signal (Ss) indicating a free condition or a busy condition of the transit sensor (105a), comprising devices (SW) for producing a transient phenomenon in a circuit (Cd, 105a) containing the transit sensor (105a), a memory (225) for storing at least one first value (Sfi) indicating a waveshape (Lf) associated with the transient phenomenon produced with the transit sensor (105a) in free condition, and means (220, 215) for periodically detecting at least one second value (Si) corresponding to the at least one first value (Sfi), the logical means (220) generating the status signal (Ss) according to the result of a comparison between the at least one first value (Sfi) and the at least one second value (Si).

FIG.2

EP 1 020 831 A1

## Description

This invention relates to a driving device for a contact transit sensor and, in particular, to a driving device according to the preamble of the first claim.

Transit sensors are commonly used in various applications, such as - for example - in automatic motorway tolling systems. A particular type of transit sensor, known as a mechanical deformation sensor, in particular of the contact type, comprises a casing made of elastically deformable material inside which two electrodes, normally reciprocally separated, are arranged. When a moving body, in the specific case a motor vehicle, transits over the sensor, the casing is deformed so as to put the electrodes in direct reciprocal contact.

Consequently, a resistance measured between the electrodes varies according to whether the transit sensor is in free condition (no vehicle) or busy condition (vehicle in transit). In particular, this resistance assumes a very high value (in the range of several M$\Omega$) in free condition (open circuit) and a very low value (in the range of a few m$\Omega$) in busy condition (short-circuit between electrodes in reciprocal contact).

The known driving devices for contact transit sensors measure the resistance between electrodes and generate a corresponding status signal indicating the transit sensor condition. In general, the driving device applies a predefined potential between the electrodes and measures a corresponding current, detecting the busy condition of the transit sensor when this current exceeds a certain threshold value.

These transit sensors and their respective driving circuits differ from those where a capacitance between electrodes (which is inversely proportional to their reciprocal distance) is measured. In this case, in order to always attain a capacitive load which ensures correct operation of the driving circuit, a thin layer of insulating material has to be placed between the electrodes so as to prevent their direct reciprocal contact. This entails a reduced variation in capacitance between free condition and busy condition of the transit sensor (in the range of several hundreds of pF), and consequently manufacturing effective and reliable driving devices is extremely difficult.

Referring back to contact transit sensors, one problem related to known driving devices is that they do not allow a stable response in time to be attained.

This is because the resistance measured between the electrodes in contact is liable to increase progressively. This increase is particularly marked with electrodes made of conducting rubber. In general, the resistance varies from the very low value (a few m$\Omega$) of a new transit sensor to the rather high values (up to several hundreds of k$\Omega$) of a worn transit sensor. This phenomenon is substantially due to the depositing of a layer of insulating dust on the electrodes. The insulating layer is produced by the mechanical abrasion of the transit sensor casing which is subjected to the intense shearing stresses exerted by the vehicles. Such stresses are particularly intense especially during acceleration and deceleration of the vehicles, which may be very heavy (in the case of trucks, for example). Furthermore, an insulating film caused by oxidation, which coats the electrodes over time, and, in the case of electrodes made of conducting rubber, a progressive degradation of the electrical characteristics of this material are added to the layer of insulating dust.

As a result, the transit sensors need to be replaced rather frequently (every 6-12 months), with the consequent high management costs of a detection system where the transit sensors are inserted.

Furthermore, known driving devices are not very reliable and their response is not uniform. This is because the resistance measured between the electrodes in contact is subject to drifts due to variations in the environmental conditions, such as temperature and humidity. This phenomenon is particularly marked when the transit sensors are used in the open and are consequently exposed to very severe environmental conditions (atmospheric precipitation, sudden changes of temperature and the like). Furthermore, in the specific case of transit sensors with conducting rubber electrodes, it is rather difficult to monitor the physical parameters of the conducting rubber accurately during the transit sensor manufacturing phases. Consequently, the resistance measured between the electrodes in contact in such transit sensors is subject to wide variation in successive batches of a single product.

The object of this invention is to overcome the aforesaid drawbacks. In order to achieve this object, a driving device for a contact transit sensor is proposed, as described in the first claim.

Briefly, this invention relates to a driving device for a contact transit sensor comprising logical means for generating a status signal indicating a free condition or a busy condition of the transit sensor, comprising means for producing a transient phenomenon in a circuit containing the transit sensor, a memory for storing at least one first value indicating a waveshape associated with the transient phenomenon produced with the transit sensor in free condition and meanss for periodically detecting at least one second value corresponding to the at least one first value, the logical means generating the status signal according to the result of a comparison between the at least one first value and the at least one second value.

Furthermore, this invention also proposes a detection system comprising said driving device and a corresponding method for driving a contact transit sensor.

Additional characteristics and the advantages of the driving device according to this invention will be evident from the description that follows of a preferred embodiment thereof, given by way of non-limiting example with reference to the appended figures in which:

Fig. 1 illustrates a pair of detection systems, each of which can employ the driving device of this invention;

Fig. 2 depicts a basic circuit diagram of one example of the driving device;

Fig. 3 illustrates various waveshapes associated with the driving device;

Fig. 4 illustrates a flow chart of a method used to manage the driving device.

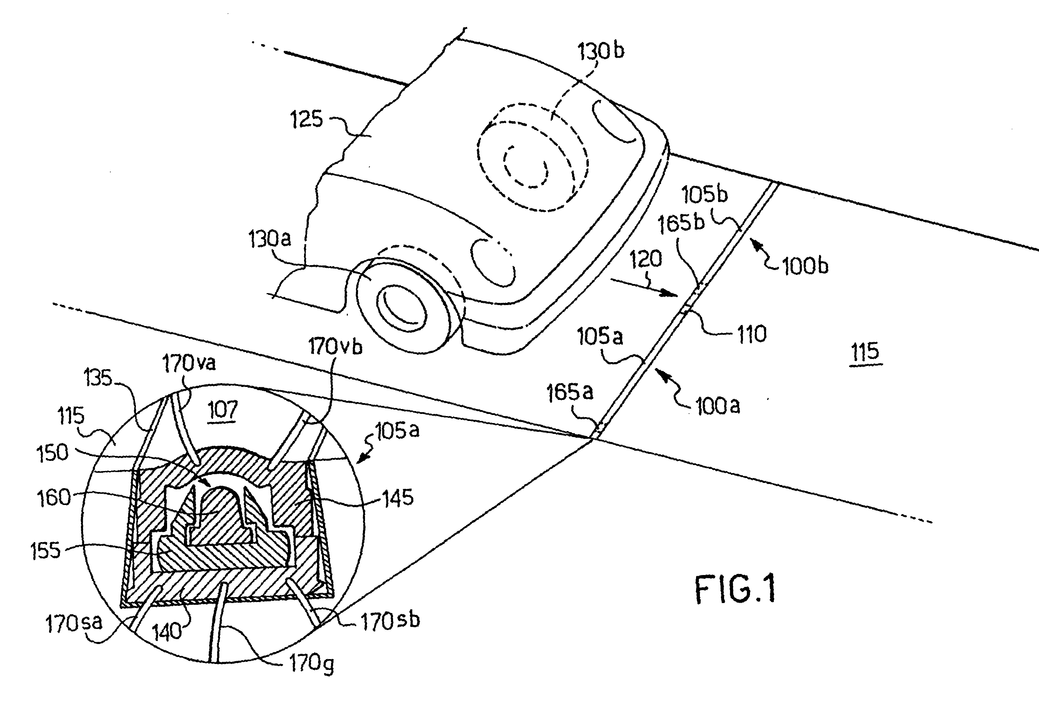

With particular reference to Fig. 1, a pair of detection systems 100a, 100b for counting the axles of vehicles in an automatic motorway tolling system is illustrated. Each detection system 100a, 100b includes a transit sensor 105a, 105b (described in detail below). The transit sensors 105a and 105b are reciprocally aligned, separated by an intermediate insulating element 110, and are arranged on the road surface 115 transversely with respect to the direction of movement 120 of a vehicle 125, for example a motor car. This permits independent detection of the transit of a righthand wheel 130a and of a left-hand wheel 130b of the vehicle 125.

Alternatively, a different number of transit sensors (even just one) are provided and are arranged in a different fashion (for example, in parallel or at a reciprocal slant), the detection system is used to control the access of vehicles to parking areas or to reserved routes, to control the access of pedestrians to hazardous areas and, in general, to detect the transit of any moving body or the presence of any object in a certain position.

The transit sensor 105a (similar considerations apply to the transit sensor 105b) is housed in a support 135 embedded in the road surface 115. The support 135 comprises a channel which is open at the top and has a dovetail cross-section. The transit sensor 105a comprises an elastically deformable tubular structure casing 107. Longitudinal tabs are formed on the external side walls (on the left and on the right) of said tubular casing 107 so as to hold the tubular casing 107 inside the support 135 when the tubular casing 107 is pushed by pressure inside the support.

The tubular casing 107 presents a constant cross-section in length and is divided (in cross-section) into a lower portion 140 and an upper portion 145, which are reciprocally connected so as to close the tubular casing 107 and to form an internal cavity 150. The lower portion 140 is made of electrically insulating material (for example, rubber) and the upper portion 145 is made of electrically conducting material (for example, conductive rubber). An insulating support 155 for an internal element 160, made of electrically conducting material and normally separated from the upper portion 145, is housed in cavity 150 (in contact with the lower portion 140). The internal element 160 and the upper portion 145 form the electrodes of the transit sensor 105a.

Similar considerations apply to a transit sensor comprising an entirely conductive tubular casing, to electrodes made of metallic material and, more generally, to any type of mechanical deformation contact transit sensor.

Each transit sensor 105a, 105b is piloted by a device 165a, 165b (described in detail below). The driving devices 165a, 165b are embedded in the tubular casings of the transit sensors 105a, 105b, although the use of external driving devices is not excluded. The driving devices 165a and 165b are powered by means of a pair of wires 170va, 170g and 170vb, 170g, respectively (where the wire 170g is used as a common reference wire). An additional pair of wires 170sa, 170g and 170sb, 170g is used by the driving devices 165a and 165b respectively to output a status signal Ss (for example, to a control system, not shown in the figure) indicating a condition of the associated transit sensor 105a and 105b. The wires 170g, 170va, 170vb, 170sa and 170sb are housed in corresponding longitudinal holes formed in the tubular casings of the transit sensors 105a, 105b and in the intermediate element 110. Alternatively, each driving device interfaces with the outside by means of a single pair of wires, which are used both to power the driving device and to detect the value of the status signal. For example, the driving device sets a different impedance on the terminals of these wires according to the condition of the transit sensor, so that the control system can, on the basis of the current intake of the driving device, detect the corresponding value of the status signal.

When the transit sensor 105a (similar considerations apply to transit sensor 105b) is in free condition, the electrodes 145 and 160 are reciprocally separated. When the transit sensor 105a is in busy condition, i.e. when the wheel 130a transits over the tubular casing 107, the portion 145 is pressed downwards by the weight of the vehicle 125 and the electrodes 145 and 160 come into reciprocal contact. The status signal Ss output by the driving device 165a via the wires 170g, 170sa assumes two distinct values, corresponding to the free condition and the busy condition of the transit sensor 105a, respectively.

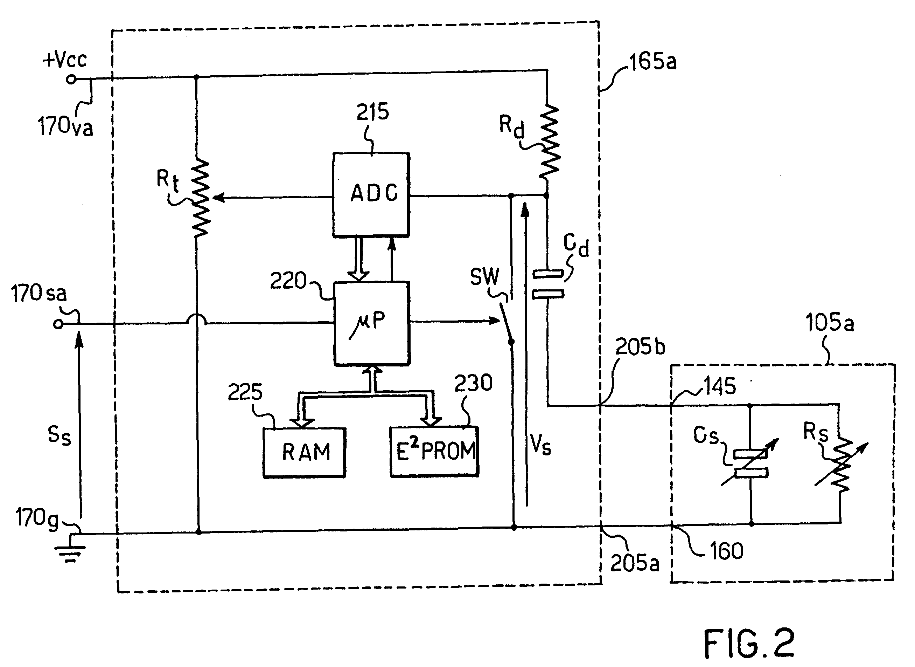

With reference now to Fig. 2 (the elements previously illustrated in Fig. 1 are identified with the same reference numerals), the electrical behaviour of the transit sensor 105a (between two terminals for connection to electrodes 160 and 145) can be schematized, as a first approximation, by means of an equivalent circuit comprising a variable capacitance capacitor Cs and a variable resistance resistor Rs, reciprocally connected in parallel. The capacitance of the capacitor Cs and the resistance of the resistor Rs vary (as described in detail below) according to the condition (free or busy) of the transit sensor 105a and according to its state of wear, its age, external environmental conditions, and the like.

The driving device 165a has two input terminals 205a and 205b which are connected to the electrode 160 and the electrode 145, respectively. Furthermore, the driving device 165a is equipped with three additional terminals which are connected to the wires 170g, 170sa and 170va, respectively. The wire 170g is connected to a reference terminal (or ground), while the wire 170va is connected to the positive terminal of a source of +Vcc power (for example, +5V), the negative terminal of which is connected to the ground terminal. The voltage between the wire 170sa and the wire 170g defines the status signal Sc.

The input terminal 205a is connected to the ground terminal. The input terminal 205b is connected to the first terminal of a capacitor Cd (for example, with a capacitance of several tens of nF); the second terminal of the capacitor Cd is connected to the first terminal of a resistor Rd (for example, with a resistance of several kΩ), the second terminal of which is connected to the +Vcc power terminal. A node S, common to the capacitor Cd and the resistor Rd, is connected via an electronic switch SW (for example, consisting of a bipolar transistor) to the ground terminal. Furthermore, the driving device 165a includes a rheostat Rt connected between the ground terminal and the +Vcc power terminal. The node S and a central movable terminal of the rheostat Rt are connected to separate input terminals of an Analog-to-Digital Converter (or ADC) 215. The converter 215 output is connected to a microprocessor 220 (or other equivalent logical means), which is further connected to a working memory 225 (typically a RAM memory) and to a non-volatile memory 230 (for example, an E$^2$PROM memory). The microprocessor 220 controls the operation of the converter 215 and the opening and closing of the switch SW (by means of specific control signals). Furthermore, the microprocessor 220 is equipped with an output terminal connected to the wire 170sa. The converter 215, the microprocessor 220, the RAM memory 225 and the E$^2$PROM memory 230 are typically integrated in a single chip made of semiconductor material.

An initial condition is considered in which the switch SW is closed, so that the capacitors Cs and Cd are discharged and a voltage Vs at node S (with respect to ground) is zero. The capacitors Cs and Cd will start charging, via the current limiting resistor Rd, when the switch SW is opened. The voltage Vs, at the end of a transient phenomenon of variable duration, will therefore reach the value of +Vcc. The values of the electrical quantities hereinbelow are identified with the same symbols used to identify the corresponding components in the figure.

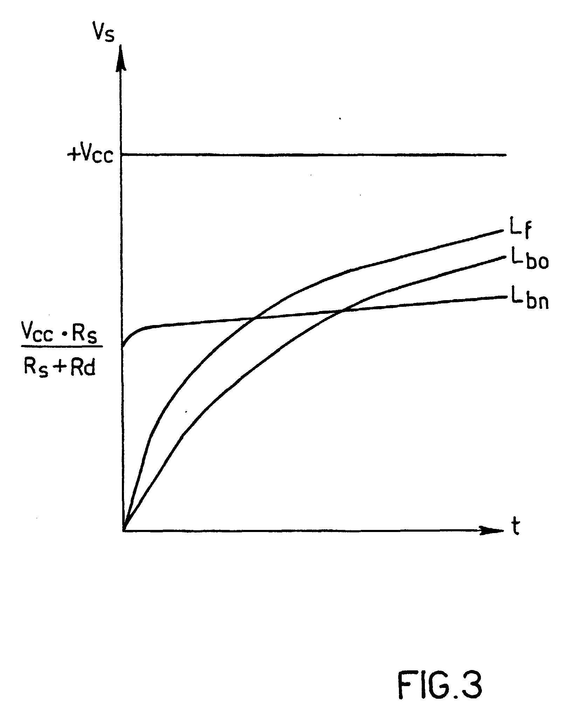

If the transit sensor 105a is in free condition, the electrodes 145, 160 are reciprocally separated. Consequently, the resistance of resistor Rs is negligible as it is comparable to an open circuit (resistance in the range of many MΩ). The capacitance of the capacitor Cs corresponds to the static capacitance distributed between the separated electrodes 145, 160 and presents a substantially constant value (in the range of several hundreds of pF). As the capacitance of the capacitor Cd (several tens of nF) was chosen so as to be much higher than this value, the total capacitance of the capacitors Cd and Cs in series is equal, as a first approximation, to the capacitance of the capacitor Cs alone. Consequently, the voltage Vs will rise exponentially from zero towards the value of +Vcc and present a time constant equal to *Rd•Cs.* The corresponding waveshape of the voltage Vs, which indicates the variation in time of this electrical quantity, is qualitatively illustrated in Fig. 3 as a curve Lf.

If the transit sensor 105a is in busy condition, the electrodes 145, 160 are in reciprocal contact. The resistance of the resistor Rs and the capacitance of the capacitor Cs vary considerably according to the state (wear, age, environmental conditions) of the transit sensor 105a. The inventors have recognized that the increase in time of the resistance Rs - for example due to an insulating layer (layer of dust and oxide film) present between the electrodes 145, 160 - is accompanied by a similar increase in the capacitance Cs (being directly proportional to the dielectric constant of the material interposed between the electrodes 145, 160).

Consequently, the capacitor Cs is negligible, with respect to the resistor Rs (typical resistance in the range of a few tens of KΩ), in defining the time constant of the transient phenomenon if the transit sensor 150a is new. At the initial instant when the switch SW is opened, the voltage Vs is equal to the voltage on the terminals of the resistor Rs (as the voltage is zero on the terminals of the capacitor Cd), i.e. $\frac{+Vcc \cdot Rs}{Rd + Rs}$. The presence of the capacitor Cd ensures that, in this case as well, the voltage Vs exponentially reaches the value of +Vcc. In particular, the capacitor Cd charges with a time constant equal to $(Rd+Rs)•Cd$ towards the value of +Vcc, while, at the same time, the current in the branch Rd, Cd, Rs - and, consequently, the voltage on the terminals of the resistor Rs - decreases accordingly; the voltage Vs increases very slowly (given the high value of the capacitance Cd) to reach the value of +Vcc at the end of the transient charge. The corresponding waveshape of the voltage Vs is qualitatively illustrated in Fig. 3 as a curve Lbn.

By contrast, if the transit sensor 150a is very old, the resistor Rs is negligible, as it is comparable to an open circuit (resistance up to many MΩ). However, the capacitance of the capacitor Cs has a value which is considerable and substantially higher than the static capacitance distributed between the separated electrodes (for example, double). As the capacitance of the capacitor Cd is at all events very much higher than this value, the total capacitance of the capacitors Cd and Cs in series is equal, as a first approximation, to the capacitance of the capacitor Cs alone. Consequently, when the switch SW is opened, the voltage Vs will rise exponentially from an initial value which is zero towards the value of +Vcc and present a time constant equal to *Rd•Cs* which, according to the foregoing, is substantially higher than the time constant of the similar transient

**EP 1 020 831 A1**

phenomenon with the transit sensor in free condition. The corresponding waveshape of the voltage Vs, illustrated in Fig. 3 as a curve Lbo, consequently presents a slope which is lower than that of the curve Lf.

Jointly considering the waveshapes shown in Fig. 3, it may be seen that the curves Lbn, Lbo, corresponding to the transit sensor in busy condition, are significantly different from the curve Lf, corresponding to the transit sensor in free condition. Such a difference is considerable both when the transit sensor is new (curve Lbn) and when the transit sensor is old (curve Lbo). Curves included between the two curves shown result from intermediate situations of wear and ageing of the transit sensor. Consequently, by comparing (as described in detail below) the waveshape of the voltage Vs with the curve Lf, it is possible to detect the condition (free or busy) of the transit sensor, regardless of its state of wear and its age. Similar considerations apply when the waveshape of the current is compared, the voltage at a different node is used (including only at the terminals of the transit sensor), the capacitors are kept charged and a discharge waveshape is considered, other circuit components are used (for example, inductors) or, more generally, when any waveshape associated with a transient phenomenon in a circuit comprising the transit sensor is used.

The driving device according to this invention permits optimization of the performance of most of the contact transit sensors on the market.

In particular, this driving device substantially compensates for the drift of electrical parameters of the transit sensor due to wear and ageing. It allows one transit sensor to be used for a long time (even years), consequently reducing the management costs of the corresponding detection system.

Furthermore, the solution according to this invention is very reliable and ensures a high uniformity of response, as it practically entirely compensates for the drift of the electrical parameters of the transit sensor due to the environmental conditions and to its manufacturing characteristics.

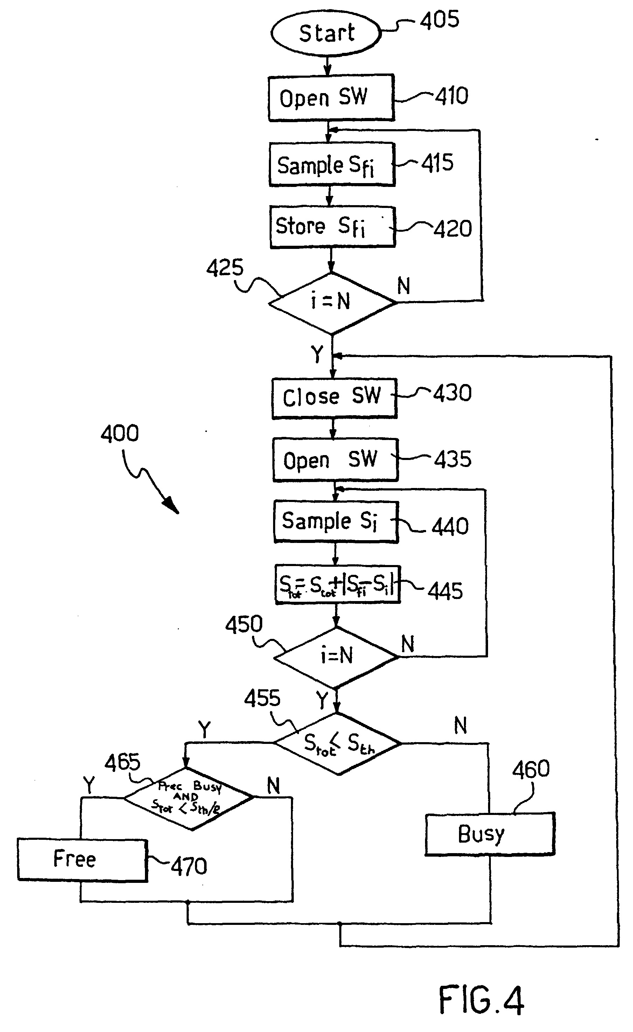

Jointly considering Fig. 2 and Fig. 4 now, the microprocessor 220 runs a specific control program stored in the E$^2$PROM memory 230 when the driving device 165a is activated. A method 400 corresponding to this control program starts at block 405 and then goes to block 410 where the processor 220 opens the switch SW (initially closed). The method then repeats a preliminary cycle for a predefined number of times N (for example, 10). Each ith cycle (with i=1...N) starts at block 415 where, with the transit sensor 105a in free condition, the voltage Vs is sampled. In particular, the microprocessor 220 activates the converter 215 which, after a predefined conversion time (for example, several tens of μs) generates a digital value which represents a reference sample Sfi of the voltage Vs. Going to block 420, the reference sample Sfi is stored in the RAM memory 215. The method proceeds to block 425, where the cycle output condition is checked (i=N). If the outcome of the check is negative, the method returns to the block 415 and the aforesaid cycle 415-425 is repeated. If, on the other hand, the outcome is positive, the method proceeds to block 430.

Similar considerations apply when a different number of Sfi samples are used, including only one. In an alternative embodiment of this invention, the waveshape corresponding to the transit sensor in free condition is sampled in a pilot detection system (transit sensor and driving device). The corresponding reference samples Sfi are then permanently stored in the E$^2$PROM memory of each driving device directly during manufacturing. This avoids the risk of the transit sensor 105a not being in free condition when the driving device 165a is activated and the aforesaid preliminary cycle 415-425 is run, during which phase the reference samples Sfi are detected.

Considering the block 430 now, the processor 220 closes the switch SW and stands by for a period of time (in the range of a few μs), sufficiently long to allow the capacitors Cs and Cd to discharge to ground. Proceeding to block 435, the processor 220 opens the switch SW again. The method then repeats an additional cycle N times, starting from block 440 where a sample Si of voltage Vs is detected. The instant of detection of each sample Si (relative to the opening of the switch SW) is substantially equal to that of the corresponding reference sample Sfi.

Considering the block 445, the sample Si is compared with the reference sample Sfi, read in the RAM memory 225. In particular, a counter Stot (initially zero) is increased by the absolute value of the difference between the sample Si and the reference sample Sfi. The method then goes to block 450, where the cycle output condition is checked (i=N). If the outcome is negative, the method returns to block 440, to repeat the aforesaid cycle 440-450.

If, on the other hand, the outcome is positive, the method proceeds to block 455, where the clock Stot is compared with a predefined threshold value Sth. If the clock Stot exceeds the threshold value Sth, the method proceeds to block 460, where the voltage at the output terminal of the microprocessor 220 (connected to wire 170sa) reaches a value (for example, 5V) such that the status signal Ss (between the wires 170g and 170sa) assumes a logical value (for example, 1) indicating that the transit sensor 105a is in busy condition. The method then returns to block 430.

If the clock Stot does not exceed the threshold value Sth, the method instead proceeds to block 465, where it checks (on the basis of the current value of the status signal Ss) whether the transit sensor 105a was previously in busy condition and whether at the same time the clock Stot exceeds a predefined fraction of the threshold value Sth (for example, half). In the affirmative case, the method returns directly to block 430 so that the status signal Ss is maintained at the busy value. This prevents undesired oscillations of the status signal Ss caused by any spurious signals which may be present. In the negative case, i.e. if the transit sensor 105a was previously in free condition or if the clock Stot does not exceed half of the threshold value Sth, the method goes to block 470, where the voltage at the output terminal of the microprocessor 220 reaches a different value (for example, 0V) so that the status signal Ss assumes a logical value (0 in the example provided) indicating that the transit sensor 105a is in free condition. The method then returns to block 430 to repeat the aforesaid cycle 430-470 continuously. Note that each cycle 430-470 has a duration in the range of a few hundred μs, which is substantially lower than the time required for a vehicle to transit over the sensor 105a (in the range of a few ms). This ensures that the condition of the transit sensor 105a is checked with a frequency which is sufficient to ensure the detection of each transit over it.

Alternatively, the status signal is switched to free value whenever the clock Stot drops below the threshold value Sth and a different comparison between the samples Si and the reference samples Sfi, and the like, is employed.

The threshold value Sth is set by means of the rheostat Rt. This is because the voltage input to converter 215 can be varied by shifting the position of the central terminal. The corresponding digital value is detected by processor 220 and stored in the RAM memory 225. This allows the threshold value Sth to be calibrated in an extremely simple and fast fashion.

This characteristic is particularly useful, for example, in applications where several transit sensors (typically four) are arranged in parallel and at a close distance from each other in the direction of movement of the vehicle. In this way, both the transit of the vehicle and its direction of movement can be detected simply by analysing the temporal sequence of the status signals associated with the various transit sensors. The possibility of calibrating the threshold voltage Sth of the driving circuit of each transit sensor externally avoids one of the transit sensors (e.g. the newest and, consequently, most sensitive) being in busy condition before another transit sensor (which is older and, consequently, less sensitive) arranged downstream with respect to the direction of movement of the vehicle, with consequent malfunctioning of the detection system.

Similar considerations apply when other equivalent devices are used to modify the threshold value Sth (both manually or by means of the external control system). In a different embodiment of this invention, no rheostat is used and the threshold value Sth is modified automatically by the processor 220 as a function of an external temperature, the age of the transit sensor 105a (for example, measured by the number of times the transit sensor 105a is in busy condition), an average of the differences between the threshold value Sth and the clock Stot (with the transit sensor 105a in busy condition), and the like. Alternatively, the threshold value Sth is initially defined and stored in the E²PROM memory 230. This value is chosen so as to ensure correct operation of the driving device with a very old transit sensor, ensuring correct operation to an even greater extent when the transit sensor is new.

Preferably, the reference samples Sfi are periodically updated (for example, every hour) at a much lower frequency than that of detection of the condition of the transit sensor. This allows to compensate for the drift of the waveshape corresponding to the transit sensor in free condition, caused mainly by the changeable environmental conditions to which the transit sensor is subject.

This operation consists in replacing the reference samples Sfi stored in the RAM memory 225 with the corresponding periodically detected samples Si. To ensure that these samples Si are significant, they must be detected either when the transit sensor is in free condition and is not about to be busy or when it is not about to become free after having been in busy condition. For this purpose, the processor stores the samples Si after a predefined number (for example, 10) of consecutive detections of free condition of the transit sensor and uses these samples Si only if, subsequently, the transit sensor is consecutively detected in free condition for the same number of times.

Similar considerations apply when a different procedure is used to update the reference samples Sfi. The driving device according to this invention is, consequently, suitable for being made by keeping the reference samples Sfi fixed.

Obviously those skilled in the art may make numerous changes and/or variants to the driving device for a contact transit sensor described above with a view to satisfying practical requirements and specifications, without however departing from the scope of protection of this invention, as defined in the following claims.

## Claims

1. Driving device (165a) for a contact transit sensor (105a) including logical means (220) for generating a status signal (Ss) indicating a free condition or a busy condition of the transit sensor (105a) characterized in that it includes means (SW) for producing a transient phenomenon in a circuit (Cd, 105a) containing the transit sensor (105a), a memory (225) for storing at least one first value (Sfi) indicating a waveshape (Lf) associated with the transient phenomenon produced with the transit sensor (105a) in the free condition and meanss (220, 215) for periodically detecting at least one second value (Si) corresponding to the at least one first value (Sfi), the logical means (220) generating the status signal (Ss) according to the result of a comparison between the at least one first value (Sfi) and the at least one second value (Si).

2. Driving device (165a) according to Claim 1, additionally including a capacitor (Cd) which can be connected in series to the transit sensor (105a) and has a capacitance substantially higher than a capacitance of the transit sensor (105a), the at least one first value and the at least one second value being, respectively, a plurality of first samples (Sfi) and a plurality of second samples (Si) of a voltage (Vs) at the terminals of the series of the capacitor (Cd) and of the transit sensor (105a).

3. Driving device (165a) according to Claim 2, having a first (170g) and a second (170va) power supply terminal suitable for being connected to corresponding terminals of a power source (+Vcc), the means for producing the transient phenomenon including a switch (SW) which can be switched between a first condition in which the series of the capacitor (Cd) and the transit sensor (105a) are short-circuited and a second condition in which the series of the capacitor (Cd) and the transit sensor (105a) are connected between the first (170g) and the second (170va) power supply terminal and in which the detection means (220, 215) include a processor (220), for periodically switching the switch (SW) to the second condition for a predefined period of time, and a converter (215) for detecting the plurality of second samples (Si) when the switch (SW) is in the second condition.

4. Driving device (165a) according to any one of Claims 1 to 3, in which the logical means (220) compare a sum (Stot) of the differences in absolute value between each first value (Sfi) and the corresponding second value (Si) with a predefined threshold value (Sth), the status signal (Ss) assuming a value (1) which indicates the busy condition of the transit sensor (105a) when said sum (Stot) exceeds the threshold value (Sth).

5. Driving device (165a) according to Claim 4, in which the logical means (220) switch the status signal from the value (1) indicating the busy condition to a further value (0) indicating the free condition of the transit sensor (105a) when said sum (Stot) is below a predefined fraction (Sth/2) of the threshold value (Sth).

6. Driving device (165a) according to Claim 4 or 5, further comprising means (Rt) for modifying the threshold value (Sth).

7. Driving device (165a) according to Claim 6, in which the means for modifying the threshold value (Sth) include a rheostat (Rt) having a first and a second terminal connected, respectively, to the first (170g) and the second (170va) power supply terminal, and a central movable terminal connected to the converter (215), the converter (215) generating the threshold value (Sth) according to a voltage between the central terminal of the rheostat (Rt) and the first power supply terminal (170g).

8. Driving device (165a) according to any one of Claims 1 to 7, in which the logical means (220) periodically update the at least one first value (Sfi) at a frequency which is substantially lower than a frequency of detection of the at least one second value (Si), replacing it in the memory (225) with the at least one second value (Si) detected when the transit sensor (105a) is in the free condition.

9. System (100a) for detecting the transit of a moving body (125) comprising at least one contact transit sensor (105a) and the driving device (165a) for the at least one transit sensor (105a) according to any one of Claims 1 to 8.

10. Method (400) for driving a contact transit sensor (105a), comprising the step (460, 470) of generating a status signal (Ss) indicating a free condition or a busy condition of the transit sensor (105a), characterized in that it comprises the following steps

  - providing (410-425) at least one first value (Sfi) indicating a waveshape (Lf) associated with a transient phenomenon in a circuit (Cd, 105a) containing the transit sensor (105a), produced with the transit sensor (105a) in the free condition,
  - periodically producing (430, 435) the transient phenomenon,
  - detecting (440) at least one second value (Si) corresponding to the at least one first value (Sfi),
  - comparing (445, 455, 465) the at least one first value (Sfi) with the at least one second value (Si),
  - generating (460, 470) the status signal (Ss) according to the result of the comparison.

FIG.1

EP 1 020 831 A1

FIG.2

EP 1 020 831 A1

9

FIG.3

FIG.4

**European Patent Office**

## EUROPEAN SEARCH REPORT

Application Number

EP 99 83 0008

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | WO 89 06413 A (TIMELAPSE INC) 13 July 1989<br>* page 5, line 12 - page 10, line 18;<br>figures 1-5 *<br>--- | 1,10 | G08G1/02<br>G01D18/00 |
| Y | WO 90 01670 A (RITMANICH WILL)<br>22 February 1990<br>* page 11, paragraph 2 - page 17,<br>paragraph 1; figures 5-8 *<br>--- | 1,10 | |
| A | EP 0 594 483 A (LANDIS & GYR BUILDING<br>CONTROL) 27 April 1994<br>* page 3, line 24 - page 5, line 53;<br>figures 1-3 *<br>--- | 1 | |
| A | FR 2 553 798 A (NARDI ELIANA)<br>26 April 1985<br>* abstract; figure 1 *<br>----- | 1,10 | |
| | | | TECHNICAL FIELDS SEARCHED (Int.Cl.6) |
| | | | E01F<br>G08G<br>G01D<br>G01R |

The present search report has been drawn up for all claims

| Place of search | Date of completion of the search | Examiner |
|---|---|---|
| THE HAGUE | 28 June 1999 | Chapple, I |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**
EP 99 83 0008

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-1999

| Patent document cited in search report | | Publication date | Patent family member(s) | | Publication date |
|---|---|---|---|---|---|
| WO 8906413 | A | 13-07-1989 | US | 4862163 A | 29-08-1989 |
| WO 9001670 | A | 22-02-1990 | AU | 4180089 A | 05-03-1990 |
| | | | EP | 0396654 A | 14-11-1990 |
| EP 0594483 | A | 27-04-1994 | FR | 2697080 A | 22-04-1994 |
| FR 2553798 | A | 26-04-1985 | US | 4603241 A | 29-07-1986 |

EPO FORM P0459

For more details about this annex : see Official Journal of the European Patent Office, No. 12/82